# EUROPEAN PATENT SPECIFICATION

(11) **EP 0 636 312 B1**
(45) Date of publication and mention of the grant of the patent: **07.01.1999**
(21) Application number: 94202168.4
(22) Date of filing: 25.07.1994
(51) Int. Cl.: A01K 1/12, A01K 15/02, A01K 11/00

(54) **A construction for automatically milking animals**
Vorrichtung zum automatischen Melken von Tieren
Dispositif de traite automatique d'animaux

(30) Priority: 28.07.1993 NL 9301318
(43) Date of publication of application: 01.02.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 189 954
- EP-A- 0 270 165
- FR-A- 1 576 765
- NL-A- 8 104 807
- NL-A- 8 602 505

## Description

The present invention relates to a construction or a similar arrangement for automatically milking animals, such as cows, comprising a shed or another space in which the animals can move about freely, a milking box, a feeding station and a plurality of resting boxes having been arranged in the shed or in another space, while furthermore there are means present for stimulating an animal to leave her resting box or the feeding station in order to proceed to the milking box.

A construction of the above defined type is known from document NL-A-8104807. From this document there is known an electric fence which extends along the entire width of the shed. By moving the electric fence all animals are driven from the shed to e.g. the milking parlour.

However, sometimes it is desirable to drive individual animals instead of all animals. It is therefore an object of the invention to obtain a construction in which it is possible to drive the animals selectively.

According to the invention this is achieved in that at least the majority of said resting boxes have said stimulating means for inducing each animal resting therein to stand up and leave its resting box, so that said animal can be separately and selectively chosen.

The presence of means for stimulating the leaving of the animals, in whichever resting box they may be, makes a more efficient circulation of the animals through the shed or another space possible.

After an animal has been milked, it will be some time before the teats of the udder of the animal milked have closed and the openings will become dry. In order to protect the teats from getting contaminated, it is advantageous to discourage the animals for some time after having been milked to enter a resting box. This can be effected when said means will be controllable by means of a computer system in such a manner that they supply a warning signal which dissuades an animal milked from entering a resting box for a certain period of time. Such a warning signal may also be useful when an animal has left a resting box for the purpose of going to the milking box and the animal is to be discouraged to enter another resting box on its way to the milking box.

In accordance with a further feature of the invention, the milking box may include means for detecting diseased or low-productive animals and for separating them from the herd. The invention therefore also relates to a construction for automatically milking animals, such as cows, comprising a shed or another space in which the animals can move about freely, a milking box, a feeding station and a plurality of resting boxes having been arranged in the shed or in another space, which construction is then characterized in that there is a reception room for diseased or low-productive animals and the milking box includes computer-controlled partitions for allowing an animal in the milking box access to either the walking area in the shed or to the reception room.

In accordance with still a further feature of the invention, at least the majority of the resting boxes and the feeding stations will include a cow identification sensor which, together with a transponder carried by the animal, forms part of a cow identification system. In this manner it becomes possible to record permanently which animal is present at which instant in which resting box, so that, when the time has come for an animal to be milked again, the means can be activated in that resting box in which the animal is resting. The said means may be constituted by a flashing light. The invention therefore also relates to a construction for automatically milking animals, such as cows, comprising a shed or another space in which the animals can move about freely, a milking box, a feeding station and a plurality of resting boxes having been arranged in the shed or in another space, which construction is then characterized in that a flashing light is controlled in such a manner that the warning signal produced thereby stimulates an animal to leave the resting box, in which she is resting, to go to the milking box, or stimulates an animal to yet pass the resting box which she has the tendency to enter or to leave same, respectively. Thus, it becomes possible to discourage an animal milked to enter a resting box for one or two hours after having been milked or, when an animal has nevertheless entered a resting box, to expel her therefrom, and it can always be established how long which animal dwells in which resting box or in which feeding station. The invention therefore further relates to a construction for automatically milking animals, such a cows, comprising a shed or another space in which the animals can move about freely, a milking box, a feeding station and a plurality of resting boxes having been arranged in the shed or in another space, which construction is then characterized in that a computer system is present, with the aid of which it can be established how long an animal dwells in a resting box or in a feeding station.

For a better understanding of the invention and to show how the same may be carried into effect, reference will now be made, by way of example, to an embodiment shown in the accompanying drawings, in which:
Figure 1 illustrates the arrangement of the construction for automatically milking animals in accordance with the invention;
Figure 2 is a side view of a resting box in the construction shown in Figure 1;
Figure 3 is a plan view of such a resting box;

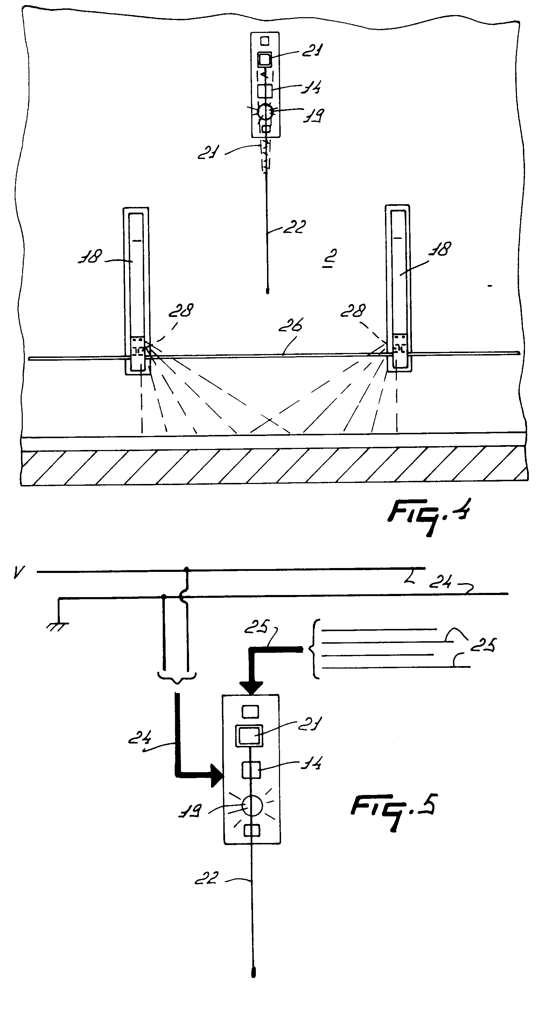

Figure 4 is a view of a resting box from the side via which an animal can enter same, and
Figure 5 illustrates the electronic means provided in a resting box.

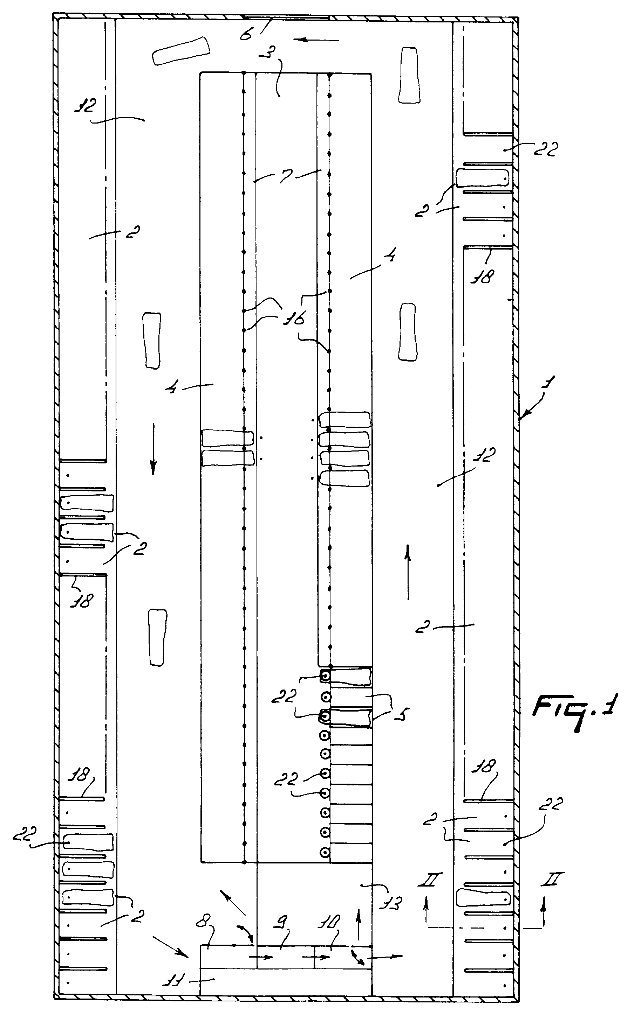

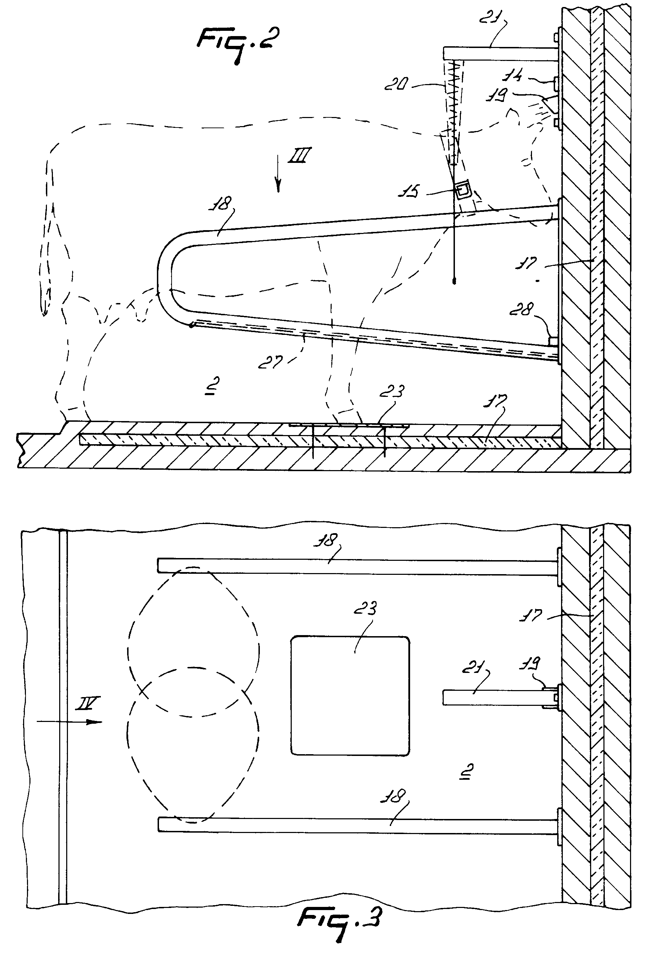

The construction for automatically milking animals shown in Figure 1 is here formed by a shed 1, in which resting boxes 2 are arranged at the two longitudinal sides thereof against the outer wall. Feeding stations 4 and 5 are arranged on both sides of a feeding passage 3. With the aid of a tractor driving in the feeding passage 3, roughage can be carried via the door 6 in the shed 1 to the feeding troughs 7 of the feeding stations 4. Besides feeding stations in which fodder can be fed to the animals, there are feeding stations 5 in which concentrate is fed to the animals. The arrangement of the resting boxes 2 and the feeding stations 4 and 5 is such that sufficient room for the animals to walk between the resting boxes and the feeding stations remains, so that they can move about to a sufficient extent and can basically walk around the shed. At the short side of the shed, opposite the short side in which the door 6 is present, there are a number of special boxes, namely a selection box 8, a cleaning box 9 and a milking box 10. These three boxes are arranged such that animals can pass through the three boxes in the said sequence in the longitudinal direction. Next to these three boxes there is a computer room 11, from which the actions to be performed in the selection box 8, the cleaning box 9, the milking box 10, the feeding stations 5 and the resting boxes 2 are controlled. The walking area 12 is formed by the space between the resting boxes 2 and the feeding stations 4 and 5, and the space between the feeding stations 4 and the short side of the shed 1 where the door 6 is located, whilst the possibility for the animals to walk about in the construction is created by the fact that the selection box 8, the cleaning box 9 and the milking box 10 are incorporated in the walking area 12. Of the animals reporting at the selection box 8 it must be determined whether they are to be milked or not. In the negative case, the animals are guided back from the selection box 8 to the walking area 12. If an animal is indeed to be milked, then it is allowed to proceed to the cleaning box 9, where the teats of the animal are cleaned, whereafter the animal is passed on to the milking box 10. In the milking box 10 there is a milking robot for the automatic connection of teat cups to the teats of an animal to be milked and for the subsequent automatic milking of the animal. Should it be found during this milking operation that the milk yield is insufficient, or that the milk is affected by e.g. mastitis, then the relevant ill or unproductive animal can be separated from the herd by leading it from the milking box 10 to a special reception area 13, instead of allowing the milked animal access again to the walking area 12.

In the embodiment shown here, all the resting boxes 2, all the feeding stations 4 and 5, and also the selection box 8 are provided with a cow identification sensor 14 which, together with a transponder 15 to be carried by the animals, forms part of a cow identification system. The cow identification sensors 14 are linked to a computer system in the computer room 11. Thus, using the cow identification system, it can be recorded in the computer which animal is present at any moment in which resting box 2 or in which feeding station 5 and also how long the animals have already rested more particularly in the resting boxes 2.

The feeding stations 4 are separated from each other by vertical posts 16. The feeding stations 5, in which concentrate can be supplied to the animals, are formed by boxes which are separated from each other. Each of the feeding stations 5 is linked to the computer system in the computer room 11, so that it can be recorded for each animal how much concentrate it has consumed, which is important for judging the health condition of the animals.

Since the animals will stay a long time in the resting boxes 2 and these boxes are arranged along the outer wall of the shed, this outer wall, and also the floor of the resting boxes 2, are provided with a thermal insulating means 17. The resting boxes are separated from each other by cubicle partitions 18. All the resting boxes 2, and preferably also all the feeding stations 5, are equipped with a warning member 19 constituted by a flash light. The flash lights are screened off in such a manner that they are not visible in other resting boxes. By means of these flash lights, which can be controlled individually for each box from the computer room 11, the animals can be warned not to enter the relevant resting box 2 or to leave same. When an animal has been warned to leave a resting box or not to enter same, but acts against this warning, the animal can yet be forced to leave the box by using an expelling member 20. This expelling member 20 operates on the basis of electric shocks, and is formed by a spring-loaded electric fence wire which is suspended from a support 21 attached to the shed wall and contacts the head or neck of the animal in a resting box 2. Besides being arranged above the resting boxes 2, such an expelling member 20 can also be applied above the troughs of the concentrate feeding stations 5 and the feeding stations 4. In Figure 1 these electric fence wires of the expelling members 20 are designated by dots 22. The electric fence wire is attached to the support 21 via a conically wound spring. Figure 1 shows the electric fence wire 22 in only a limited number of resting boxes and feeding stations. This wire can of course also be used in other resting boxes and feeding stations. The expelling member 20 operating on the basis of electric fence wire is controlled by the computer system in the computer room 11. The expelling member is then not only controlled in such a manner that at the instant determined by the computer system electric shocks are applied to the animals in the relevant resting boxes or feeding stations, but it is also possible to increase the intensity of the electric shocks gradually and automatically. For an optimum efficiency of the expelling system 20, a ground plate 23 is accommodated in the floor of the relevant boxes and feeding stations.

The supply voltages and control signals required for operating the cow identification sensor 14, the warning member 19 and the expelling member 20 are fed to the relevant resting boxes and feeding stations via a supply voltage wiring system 24 and process control wiring system 25, both shown schematically in Figure 5.

The resting boxes 2 additionally include a disinfecting implement for disinfecting, after an animal has left the relevant resting box, this resting box. To that end, a line 26 for the supply of a disinfectant runs along the resting boxes. Via a line 27, which is connected to this line 26 and runs through or along the cubicle partitions 18 and at its end is provided with a spray nozzle, a disinfecting liquid can be sprayed onto the lying area of the animal in the resting box, as soon as this animal has left same, whilst more specifically is disinfected the place in which the udder contacts the floor. By passing a line 27 having a spray nozzle at its end, in or along the two cubicle partitions 18, a portion of the resting area can be sprayed from both sides. That portion of the resting area which is covered by two of these spray nozzles is denoted in Figure 3 by means of broken lines. Near the point in which the line 27 is connected to the line 26 running along the outer wall there is provided a valve 28 which is controlled by the computer system in the computer room 11, so that a given valve or given valves can be opened at the instant at which it is determined by the computer that an animal has left the resting box.

The shed described here is designed as a loose housing for approximately eighty animals, forty resting boxes having been arranged on either side of the shed and twice forty feeding stations having been arranged in the centre of the shed. When an animal goes to the milking box 10 for being milked, a check is to be made whether it is eligible for milking. If an insufficient period of time after the previous milking turn has elapsed, the animal can be denied access to the milking box 10. Using computer-controlled partitioning means between the selection box 8 and the walking area 12 on the one hand, and between the selection box 8 and the cleaning box 9 on the other, it is possible by means of the cow identification data to establish whether an animal having entered the selection box must be send back to the walking area 12 or may be allowed to proceed to the cleaning box. After having been cleaned and milked, it can be established whether the animal may go to the walking area 12 or must be isolated and be passed to the area 13. During milking of an animal, the amount of the milk yield and the quality of the milk are simultaneously updated. When the yield is too low and/or the milk is affected by e.g. mastitis, this is detected by the computer system and the computer system can control partitioning means between on the one hand the milking box 10 and the collecting area 13 and on the other hand between the milking box 10 and the walking area 12 in that sense that the animal milked is led to either the collecting area 13 or the walking area 12.

After an animal has been milked, it should not rest immediately. By giving the teats of the animal milked the opportunity to close and dry completely before the animal's udder comes into contact with the lying area in a resting box 2, the risk of the udder being infected is minimized. This risk can also be obviated by taking care that the resting boxes are always adequately disinfected. To prevent that an animal milked enters a resting box 2 before one or two hours have elapsed after it was milked, the resting boxes are provided with the warning member 19, formed by a flash light, and an expelling member 20 which gives electric shocks to the animal. After the animals have proceeded to the feeding station and have eaten, they may thereafter go to a resting box. When the animals are to be milked thereafter again, the flash light warns them to leave the resting box. If they do not do so, they are given increasingly intensive electric shocks via the electric fence wire, until they leave the resting box. Since, using the cow identification system present in all the boxes, it can at all times be determined which animal is present at which instant in which box, an animal can always be driven at the proper instant from a given box to go to the milking box 10. The animal can be milked for 5 to 10 minutes with the aid of the computer system, whilst, with the aid of the computer system, an animal is encouraged to take food, to ruminate and to rest after milking for approximately 500 minutes, whereafter the computer system provides that this cycle is automatically repeated.

The invention is not limited to the embodiment shown here, but also relates to all kinds of modifications thereof, falling within the scope of protection of the accompanying claims.

## Claims

1. A construction or a similar arrangement for automatically milking animals, such as cows, comprising a shed (1) or another space in which the animals can move about freely, a milking box (10), a feeding station (4, 5) and a plurality of resting boxes (2) having been arranged in the shed (1) or in another space, while furthermore there are means (19, 20) present for stimulating an animal to leave her resting box (2) or the feeding station in order to proceed to the milking box (10), characterized in that at least the majority of said resting boxes (2) have said stimulating means (19, 20) for inducing each animal resting therein to stand up and leave its resting box, (2) so that said animal can be separately and selectively chosen.

2. A construction as claimed in claim 1, characterized in that a computer system is present, by means of which the said means (19) are controllable in such a manner that they supply a warning signal which dissuades an animal milked from entering a resting box (2) for a certain period of time after having been milked.

3. A construction as claimed in any one of the preceding claims, characterized in that there are approximately as many feeding stations (4, 5) as there are resting boxes (2).

4. A construction as claimed in any one of the preceding claims, characterized in that there are approximately eighty resting boxes (2).

5. A construction as claimed in any one of the preceding claims, characterized in that there are approximately eighty feeding stations (4, 5).

6. A construction as claimed in any one of the preceding claims, characterized in that feeding stations (4) for fodder are arranged on both sides of a feeding passage (3).

7. A construction as claimed in claim 6, characterized in that at least one side of the feeding passage (3) there are feeding stations (5) for feeding concentrate.

8. A construction as claimed in any one of the preceding claims, characterized in that the resting boxes (2) are accommodated along the outer wall of the shed (1).

9. A construction as claimed in any one of the preceding claims, characterized in that between the resting boxes (2) and the feeding stations (4, 5) there is a walking area (12), via which the animal can proceed to the milking box (10).

10. A construction as claimed in claim 9, characterized in that a selection box (8) with computer-controllable partitions is present for allowing the animals proceeding to the milking box (10) either to pass to the milking box (10) or to send them back to the walking area (12).

11. A construction as claimed in claim 9 or 10, characterized in that a cleaning box (9) is present for cleaning at least the teats of an animal before allowing her to enter the milking box (10).

12. A construction as claimed in any one of the preceding claims, characterized in that the milking box (10) includes at least one milking robot for automatically connecting teat cups to the teats of an animal and for automatically milking the animal.

13. A construction as claimed in any one of the preceding claims, characterized in that the milking box (10) includes means for detecting diseased or low-productive animals and for separating them from the herd.

14. A construction as claimed in claim 13, characterized in that a reception room (13) for diseased or low-productive animals is present, and the milking box (10) includes computer-controlled partitioning means for allowing an animal in the milking box (10) either to pass to the walking area (12) or to the reception room (13).

15. A construction as claimed in any one of the preceding claims, characterized in that there are arranged consecutively and in such a manner that they can be passed through in one direction, a selection box (8), a cleaning box (9) and a milking box (10) and, positioned at the longitudinal side of these boxes (8, 9, 10), a computer room (11).

16. A construction as claimed in any one of the preceding claims, characterized in that at least the majority of the resting boxes (2) and feeding stations (4, 5) are equipped with a cow identification sensor (14) which, together with a transponder (15) to be carried by the animals, forms part of a cow identification system.

17. A construction as claimed in any one of the preceding claims, characterized in that a selection box (8) for deciding whether the animals may enter the milking box (10) or not, is equipped with a cow identification sensor (14) which, together with a transponder (15) to be carried by the animals, forms part of a cow identification system.

18. A construction as claimed in claim 16 or 17, characterized in that the cow identification system is linked to the computer system of the construction.

19. A construction as claimed in any one of the preceding claims, characterized in that a resting box (2) includes a computer-controlled flashing light (19).

20. A construction as claimed in any one of the preceding claims, characterized in that a resting box (2) includes a flashing light (19) which is directly controlled by a cow identification system.

21. A construction as claimed in claim 19 or 20, characterized in that a flashing light (19) is controlled in such a manner that the warning signal supplied thereby stimulates an animal to leave the resting box (2), in which she is resting, with the object of going to the milking box (10), or stimulates an animal to yet pass the resting box (2) which she has the tendency to enter or to leave same, respectively, when having already entered.

22. A construction as claimed in any one of the preceding claims, characterized in that at least the majority of the resting boxes (2) and feeding stations (4, 5) include an expelling member (20), which, as it is in contact with the animal, expels same from a resting box (2) or feeding station (4, 5) by means of electric shocks.

23. A construction as claimed in claim 19 and 22, characterized in that a predetermined number of seconds after the flashing light has been activated and the animal not yet having left the resting box (2), the expelling member (20) is activated.

24. A construction as claimed in claim 23, characterized in that the intensity of the electric shocks can be increased automatically.

25. A construction as claimed in claim 23 or 24, characterized in that a computer system is present, in which it is recorded when an animal has been milked and with the aid of which an animal is stimulated to leave a resting box (2) or feeding station (4, 5) when a time interval of approximately 7.5 to 8 hours has elapsed after the last milking turn.

26. A construction as claimed in any one of the preceding claims, characterized in that the time interval between the last milking turn of an animal and the subsequent stimulation of the animal to go to the milking box (10), is adjustable.

27. A construction as claimed in any one of the preceding claims, characterized in that a computer system is present, with the aid of which an animal milked is dissuaded from entering a resting box (2) for one to two hours, or, when the animal has nevertheless entered a resting box (2), is expelled therefrom.

28. A construction as claimed in any one of the preceding claims, characterized in that a computer system is present, in which it is established how long an animal dwells in a resting box (2) or in a feeding station (4, 5).

## Patentansprüche

1. Vorrichtung oder ähnliche Anordnung zum automatischen Melken von Tieren, wie z. B. Kühen, mit einem Stall (1) oder einem anderem Raum, in dem sich die Tiere frei bewegen können, einer Melkbox (10), einer Fütterungsstation (4, 5) sowie mehreren Ruheboxen (2), die in dem Stall (1) oder in einem anderen Raum angeordnet sind, wobei ferner Vorrichtungen (19, 20) vorhanden sind, um ein Tier zu veranlassen, seine Ruhebox (2) oder die Fütterungsstation zu verlassen, um zur Melkbox (10) zu gehen,
dadurch gekennzeichnet, daß zumindest die Mehrzahl der genannten Ruheboxen (2) die Stimulierungsvorrichtungen (19, 20) aufweist, um jedes darin ruhende Tier zum Aufstehen und Verlassen seiner Ruhebox (2) zu bewegen, so daß das Tier abgesondert und einzeln ausgewählt werden kann.

2. Vorrichtung nach Anspruch 1,
dadurch gekennzeichnet, daß ein Computersystem vorhanden ist, mittels dessen die Vorrichtung (19) derart zu steuern ist, daß sie ein Warnsignal abgibt, welches ein gemolkenes Tier daran hindert, während eines bestimmten Zeitraumes nach dem Melken eine Ruhebox (2) zu betreten.

3. Vorrichtung nach einem der vorhergehenden Ansprüche,
dadurch gekennzeichnet, daß etwa ebenso viele Fütterungsstationen (4, 5) wie Ruheboxen (2) vorhanden sind.

4. Vorrichtung nach einem der vorhergehenden Ansprüche,
dadurch gekennzeichnet, daß etwa achtzig Ruheboxen (2) vorhanden sind.

5. Vorrichtung nach einem der vorhergehenden Ansprüche,
dadurch gekennzeichnet, daß etwa achtzig Fütterungsstationen (4, 5) vorhanden sind.

6. Vorrichtung nach einem der vorhergehenden Ansprüche,
dadurch gekennzeichnet, daß auf beiden Seiten einer Fütterungspassage (3) Fütterungsstationen (4) für Futter angeordnet sind.

7. Vorrichtung nach Anspruch 6,
dadurch gekennzeichnet, daß auf mindestens einer Seite der Fütterungspassage (3) Fütterungsstationen (5) zum Verfüttern von Kraftfutter angeordnet sind.

8. Vorrichtung nach einem der vorhergehenden Ansprüche,
dadurch gekennzeichnet, daß die Ruheboxen (2) längs der Außenwand des Stalles (1) angeordnet sind.

9. Vorrichtung nach einem der vorhergehenden Ansprüche,
dadurch gekennzeichnet, daß zwischen den Ruheboxen (2) und den Fütterungsstationen (4, 5) ein Laufbereich (12) vorhanden ist, durch den das Tier zum Erreichen der Melkbox (10) laufen kann.

10. Vorrichtung nach Anspruch 9,
dadurch gekennzeichnet, daß eine Auswahlbox (8) mit rechnergesteuerten Trennwänden vorhanden ist, um den zur Melkbox (10) gehenden Tieren entweder den Durchgang zur Melkbox (10) zu gestatten oder sie in den Laufbereich (12) zurückzuschicken.

11. Vorrichtung nach Anspruch 9 oder 10,
dadurch gekennzeichnet, daß eine Reinigungsbox (9) vorhanden ist, um zumindest die Zitzen eines Tieres zu reinigen, bevor ihm das Betreten der Melkbox (10) gestattet wird.

12. Vorrichtung nach einem der vorhergehenden Ansprüche,
dadurch gekennzeichnet, daß die Melkbox (10) mindestens einen Melkroboter zum automatischen Anschließen von Zitzenbechern an die Zitzen eines Tieres und zum automatischen Melken des Tieres aufweist.

13. Vorrichtung nach einem der vorhergehenden Ansprüche,
dadurch gekennzeichnet, daß die Melkbox (10) eine Vorrichtung aufweist, mittels der erkrankte oder wenig Milch gebende Tiere ermittelt und aus der Herde ausgesondert werden.

14. Vorrichtung nach Anspruch 13,
dadurch gekennzeichnet, daß ein Aufnahmeraum (13) für erkrankte oder wenig Milch gebende Tiere vorhanden ist und die Melkbox (10) rechnergesteuerte Trennvorrichtungen aufweist, um einem in der Melkbox (10) befindlichen Tier entweder den Durchgang zum Laufbereich (12) oder zum Aufnahmeraum (13) zu gestatten.

15. Vorrichtung nach einem der vorhergehenden Ansprüche,
dadurch gekennzeichnet, daß eine Auswahlbox (8), eine Reinigungsbox (9) und eine Melkbox (10) nacheinander und in der Weise angeordnet sind, daß sie in einer Richtung zu durchschreiten sind, wobei an der Längsseite dieser Boxen (8, 9, 10) ein Computerraum (11) angeordnet ist.

16. Vorrichtung nach einem der vorhergehenden Ansprüche,
dadurch gekennzeichnet, daß zumindest die Mehrzahl der Ruheboxen (2) und der Fütterungsstationen (4, 5) mit einem Kuhidentifizierungssensor (14) ausgestattet ist, der zusammen mit einem von den Tieren zu tragenden Transponder (15) Teil eines Kuhidentifizierungssystems ist.

17. Vorrichtung nach einem der vorhergehenden Ansprüche,
dadurch gekennzeichnet, daß eine Auswahlbox (8) zum Entscheiden, ob die Tiere die Melkbox (10) betreten dürfen oder nicht, mit einem Kuhidentifizierungssensor (14) ausgestattet ist, der zusammen mit einem von den Tieren zu tragenden Transponder (15) Teil eines Kuhidentifizierungssystems ist.

18. Vorrichtung nach Anspruch 16 oder 17,
dadurch gekennzeichnet, daß das Kuhidentifizierungssystem mit dem Computersystem der Vorrichtung verbunden ist.

19. Vorrichtung nach einem der vorhergehenden Ansprüche,
dadurch gekennzeichnet, daß eine Ruhebox (2) ein rechnergesteuertes Blitzlicht (19) aufweist.

20. Vorrichtung nach einem der vorhergehenden Ansprüche,
dadurch gekennzeichnet, daß eine Ruhebox (2) ein Blitzlicht (19) aufweist, das von einem Kuhidentifizierungssystem unmittelbar gesteuert ist.

21. Vorrichtung nach Anspruch 19 oder 20,
dadurch gekennzeichnet, daß ein Blitzlicht (19) derart gesteuert ist, daß das von ihm abgegebene Warnsignal ein Tier zum Verlassen der Ruhebox (2) anregt, in der es ruht, mit dem Zweck, zur Melkbox (10) zu gehen, oder ein Tier dazu veranlaßt, an der Ruhebox (2), die es betreten möchte, vorbeizugehen bzw. diese zu verlassen, wenn es sie bereits betreten hat.

22. Vorrichtung nach einem der vorhergehenden Ansprüche,
dadurch gekennzeichnet, daß zumindest die Mehrzahl der Ruheboxen (2) und der Fütterungsstationen (4, 5) eine Austreibevorrichtung (20) aufweist, die bei Kontakt mit dem Tier dieses durch Elektroschocks aus einer Ruhebox (2) oder einer Fütterungsstation (4, 5) austreibt.

23. Vorrichtung nach Anspruch 19 und 22,
dadurch gekennzeichnet, daß nach einer vorgegebenen Anzahl von Sekunden, wenn das Blitzlicht ausgelöst wurde und das Tier die Ruhebox (2) noch nicht verlassen hat, die Austreibevorrichtung (20) aktiviert wird.

24. Vorrichtung nach Anspruch 23,
dadurch gekennzeichnet, daß die Stärke der Elektroschocks automatisch zu steigern ist.

25. Vorrichtung nach Anspruch 23 oder 24,
dadurch gekennzeichnet, daß ein Computersystem vorhanden ist, in dem der Zeitpunkt des Melkens eines Tieres aufgezeichnet wird, und mittels dessen ein Tier dazu bewegt wird, eine Ruhebox (2) oder eine Fütterungsstation (4, 5) zu verlassen, wenn seit dem letzten Melkvorgang eine Zeitraum von etwa 7,5 bis 8 Stunden vergangen ist.

26. Vorrichtung nach einem der vorhergehenden Ansprüche,
dadurch gekennzeichnet, daß der Zeitabstand zwischen dem letzten Melken eines Tieres und der anschließenden Aufforderung des Tieres, zur Melkbox (10) zu gehen, einstellbar ist.

27. Vorrichtung nach einem der vorhergehenden Ansprüche,
dadurch gekennzeichnet, daß ein Computersystem vorhanden ist, mittels dessen ein gemolkenes Tier für die Dauer von ein bis zwei Stunden am Betreten einer Ruhebox (2) gehindert oder aus dieser ausgetrieben wird, wenn das Tier eine Ruhebox (2) dennoch betreten hat.

28. Vorrichtung nach einem der vorhergehenden Ansprüche,
dadurch gekennzeichnet, daß ein Computersystem vorhanden ist, in dem aufgezeichnet wird, wie lang sich ein Tier in einer Ruhebox (2) oder in einer Fütterungsstation (4, 5) aufhält.

## Revendications

1. Dispositif ou système similaire de traite automatique d'animaux, tels que des vaches, comprenant une étable (1) ou un autre espace dans lequel les animaux peuvent circuler librement, une stalle de traite (10), un poste d'alimentation (4, 5) et une pluralité de stalles de repos (2) ayant été aménagées dans l'étable (1) ou dans un autre espace, tandis que, de plus, il y a des moyens (19, 20) présents pour inciter un animal à quitter sa stalle de repos (2) ou le poste d'alimentation pour se rendre à la stalle de traite (10),
**caractérisé** en ce qu'au moins la majorité desdites stalles de repos (2) ont lesdits moyens de stimulation (19, 20) pour inciter chaque animal s'y reposant à se mettre debout et à quitter sa stalle de repos (2), de telle sorte que ledit animal puisse être choisi séparément et de manière sélective.

2. Dispositif selon la revendication 1, caractérisé en ce qu'un système informatique est présent, au moyen duquel lesdits moyens (19) peuvent être commandés de telle manière qu'ils émettent un signal avertisseur qui dissuade un animal trait d'entrer dans une stalle de repos (2) pendant un certain temps après avoir été trait.

3. Dispositif selon l'une quelconque des revendications précédentes, caractérisé en ce qu'il y a approximativement autant de postes d'alimentation (4, 5) qu'il y a de stalles de repos (2).

4. Dispositif selon l'une quelconque des revendications précédentes, caractérisé en ce qu'il y a approximativement quatre-vingt stalles de repos (2).

5. Dispositif selon l'une quelconque des revendications précédentes, caractérisé en ce qu'il y a approximativement quatre-vingt postes d'alimentation (4, 5).

6. Dispositif selon l'une quelconque des revendications précédentes, caractérisé en ce que des postes d'alimentation (4) en fourrage sont disposés de part et d'autre d'un passage d'alimentation (3).

7. Dispositif selon la revendication 6, caractérisé en ce qu'il y a, sur au moins un côté du passage d'alimentation (3) des postes d'alimentation (5) pour l'alimentation en concentré.

8. Dispositif selon l'une quelconque des revendications précédentes, caractérisé en ce que les stalles de repos (2) sont installées le long du mur extérieur de l'étable (1).

9. Dispositif selon l'une quelconque des revendications précédentes, caractérisé en ce qu'il y a, entre les stalles de repos (2) et les postes d'alimentation (4, 5) une zone de marche (12) par laquelle l'animal peut se rendre à la stalle de traite (10).

10. Dispositif selon la revendication 9, caractérisé en ce qu'une stalle de sélection (8) avec des cloisons pouvant être commandées par ordinateur est présente pour permettre aux animaux allant à la stalle de traite (10), soit de passer jusqu'à la stalle de traite (10), soit d'être renvoyé à la zone de marche (12).

11. Dispositif selon la revendication 9 ou 10, caractérisé en ce qu'une stalle de nettoyage (9) est présente pour nettoyer au moins les trayons d'un animal avant de lui permettre d'entrer dans la stalle de traite (10).

12. Dispositif selon l'une quelconque des revendications précédentes, caractérisé en ce que la stalle de traite (10) comporte au moins un robot trayeur pour relier automatiquement des godets de trayons aux trayons d'un animal et pour traire l'animal automatiquement.

13. Dispositif selon l'une quelconque des revendications précédents, caractérisé en ce que la stalle de traite (10) comporte des moyens pour détecter des animaux malades ou peu productifs et pour les séparer du troupeau.

14. Dispositif selon la revendication 13, caractérisé en ce qu'un local de réception (13) pour les animaux malades ou peu productifs est présent, et la stalle de traite (10) comporte des moyens de cloisonnement pour permettre à un animal dans la stalle de traite (10) de passer, soit dans la zone de marche (12), soit dans le local de réception (13).

15. Dispositif selon l'une des revendications précédentes, caractérisé en ce que sont disposées consécutivement et de manière à pouvoir être traversées dans un seul sens, une stalle de sélection (8), une stalle de nettoyage (9) et une stalle de traite (10) et, positionnée sur le côté longitudinal de ces stalles, une salle d'ordinateur (11).

16. Dispositif selon l'une quelconque des revendications précédentes, caractérisé en ce qu'au moins la majorité des stalles de repos (2) et des postes d'alimentation (4, 5) sont équipés d'un capteur (14) d'identification des vaches faisant partie, ensemble avec un émetteur-récepteur à porter par l'animal, d'un système d'identification des vaches.

17. Dispositif selon l'une quelconque des revendications précédentes, caractérisé en ce qu'une stalle de sélection (8) pour décider si l'animal peut, ou non, entrer dans la stalle de traite (10) est équipée d'un capteur (14) d'identification des vaches faisant partie, ensemble avec un émetteur-récepteur (15) à porter par l'animal, d'un système d'identification des vaches.

18. Dispositif selon la revendication 16 ou 17,caractérisé en ce que le système d'identification des vaches est relié au système informatique du dispositif.

19. Dispositif selon l'une quelconque des revendications précédentes, caractérisé en ce qu'une stalle de repos (2) comporte une lumière clignotante (19) commandée par ordinateur.

20. Dispositif selon l'une quelconque des revendications précédentes, caractérisé en ce qu'une stalle de repos (2) comporte une lumière clignotante (19) qui est commandée directement par un système d'identification des vaches.

21. Dispositif selon la revendication 19 ou 20, caractérisé en ce qu'une lumière clignotante (19) est commandée de telle manière que le signal avertisseur qu'elle émet incite un animal à quitter la stalle de repos (2) où il se repose, en vue de le faire aller à la stalle de traite (10), ou incite un animal à passer à l'écart de la stalle de repos où il a tendance à entrer, ou d'en sortir, respectivement, quand il y est déjà entré.

22. Dispositif selon l'une quelconque des revendications précédentes, caractérisé en ce qu'au moins la majorité des stalles de repos (2) et des postes d'alimentation (4, 5) comportent un organe expulseur (20) qui, en étant au contact de l'animal, l'expulse d'une stalle de repos (2) ou d'un poste d'alimentation (4, 5) au moyen de chocs électriques.

23. Dispositif selon les revendications 19 et 20, caractérisé en ce que l'organe expulseur (20) est mis en action après un nombre prédéterminé de secondes après la mise en action de la lumière clignotante (19) et quend l'animal n'a pas encore quitté la stalle de repos (2).

24. Dispositif selon la revendication 23, caractérisé en ce que l'intensité des chocs électriques peut être augmentée automatiquement.

25. Dispositif selon la revendication 23 ou 24, caractérisé en ce qu'un système informatique est présent, qui enregistre quand un animal a été trait et à l'aide duquel un animal est incité à quitter une stalle de repos (2) ou un poste d'alimentation (4, 5) quand s'est écoulé un délai approximativement 7,5 à 8 heures après la dernière traite précédente.

26. Dispositif selon l'une quelconque des revendications précédentes, caractérisé en ce que le délai, entre la dernière traite d'un animal et l'incitation subséquente de l'animal pour le faire aller à la stalle de traite (10), est réglable.

27. Dispositif selon l'une quelconque des revendications précédentes, caractérisé en ce qu'un système informatique est présent, à l'aide duquel un animal trait est dissuadé d'entrer dand une stalle de traite (2) pendant une ou deux heures, ou, quand l'animal est néanmoins entré dans une stalle de traite (2), il en est expulsé.

28. Dispositif selon l'une quelconque des revendications précédentes, caractérisé en ce qu'un système informatique est présent, dans lequel il est déterminé combien de temps un animal séjourne dans une stalle de traite (2) ou dans un poste d'alimentation (4, 5).
